# EUROPEAN PATENT APPLICATION

(11) **EP 3 453 550 A1**
(43) Date of publication of application: **13.03.2019**
(21) Application number: 17812971.4
(22) Date of filing: 27.03.2017
(51) Int. Cl.: B60K 6/405, B60K 6/36, B60K 6/365, B60K 6/387, B60K 6/40, B60K 6/442, B60K 17/04, B60L 11/14, F16H 3/093, F16H 3/72

(54) **TRANSAXLE DEVICE**

(30) Priority: 13.06.2016 JP 2016117006
(71) Applicant: Mitsubishi Jidosha Kogyo Kabushiki Kaisha, Tokyo 108-8410 (JP)
(72) Inventor: OGINO, Daizo, Tokyo 108-8410 (JP); MATSUSHITA, Masahiro, Tokyo 108-8410 (JP)
(74) Representative: Regimbeau
(86) International application number: PCT/JP2017/012272
(87) International publication number: WO 2017/217065

(57) **Abstract**

A transaxle device (1) for a hybrid vehicle including an engine (2), a first rotating electric machine (3), and a second rotating electric machine (4) individually transmits power of the engine (2) and power of the first rotating electric machine (3) to an output shaft (12) on a drive wheel side and also transmits the power of the engine (2) to the second rotating electric machine (4). Further, the transaxle device (1) includes a differential gear (18) which is interposed in the output shaft (12) and a switching mechanism (20) which is interposed on a power transmission path from the engine (2) to the output shaft (12) and switches a high gear stage (11H, 15H) and a low gear stage (11L, 15L). The high gear stage (11H, 15H) is disposed on the opposite side to the differential gear (18) with respect to the low gear stage (11L, 15L) inside a casing (1C) of the transaxle device (1).

## Description

### Technical Field

The present invention relates to a transaxle device used in a hybrid vehicle including an engine and two rotating electric machines.

### Background Art

Conventionally, among hybrid vehicles including an engine and a rotating electric machine (a motor, a generator, and a motor generator), vehicles traveling while switching traveling modes are in practical use. A traveling mode includes an EV mode in which the vehicle travels only by a motor using charged power of a battery, a series mode in which the vehicle travels only by a motor while driving a generator to generate electric power by an engine, and a parallel mode in which the vehicle travels by using an engine and a motor together. The switching of the traveling mode is performed by controlling a mechanism such as a sleeve or a clutch interposed on a power transmission path inside a transaxle device. This mechanism is disposed on, for example, a shaft inside the power transmission path between the engine and the generator or a shaft inside the power transmission path between the engine and a drive wheel (see Patent Literatures 1 and 2).

### Prior Art Documents

### Patent Documents

Patent Document 1: Japanese Laid-open Patent Publication No.11-170877
Patent Document 2: Japanese Laid-open Patent Publication No.2013-180680

### Summary of Invention

### Problem to be solved by Invention

Incidentally, when it is possible to switch gears in response to a driver's request output or vehicle speed without switching the traveling mode, a traveling pattern increases and hence improvement of drivability or fuel economy is expected. In order to realize this, a plurality of switchable gears may be provided inside the transaxle device. However, since a differential gear (hereinafter, referred to as a "differential") is provided inside the transaxle device, the transaxle device easily increases in size when a plurality of gear stages and a mechanism for switching the gear stages are built therein.

Further, since a drive shaft is connected from the outside of the casing of the transaxle device to the output shaft having the differential interposed therein, a space for connecting the drive shaft is provided on the extension line of the output shaft outside the casing. Thus, when a plurality of gears or a mechanism for switching the gears are provided inside the casing, it is desirable to provide a structure capable of suppressing an increase in size of the transaxle device after securing the space.

The object of the invention is to provide a transaxle device capable of increasing a traveling pattern and securing a drive shaft connection space while suppressing an increase in size of the transaxle device. Furthermore, this object is not limited and another object of the invention is to exhibit operations and effects which are derived by each configuration illustrated in the embodiment for carrying out the invention to be described later and which is not obtainable by the conventional technique.

### Solution to Problem

(1) A transaxle device disclosed herein is a transaxle device for a hybrid vehicle including an engine, a first rotating electric machine, and a second rotating electric machine and operable to individually transmit power of the engine and power of the first rotating electric machine to an output shaft on a drive wheel side and also to transmit the power of the engine to the second rotating electric machine, the transaxle device including: a differential gear which is interposed in the output shaft; and a switching mechanism which is interposed on a power transmission path from the engine to the output shaft and switches a high gear stage and a low gear stage, and wherein the high gear stage is disposed on the opposite side to the differential gear with respect to the low gear stage inside a casing of the transaxle device. Further, the first rotating electric machine means an electric power generator (a motor generator) or an electric motor which includes a rotating armature or field and has at least an electric motor function. Furthermore, the second rotating electric machine means an electric power generator (a motor generator) or an electric power generator which includes a rotating armature or field and has at least an electric power generator function.
(2) The switching mechanism may include a high side clutch which connects or disconnects the high gear stage in the power transmission path and a low side clutch which connects or disconnects the low gear stage in the power transmission path.
(3) The switching mechanism may be obtained by a combination of the high side clutch and the low side clutch as an integrated object.
(4) Alternatively, in the switching mechanism, the high side clutch and the low side clutch may be interposed on different shafts so as to be located at a position overlapping each other in a direction orthogonal to an axial direction.
(5) The transaxle device may further include: an input shaft which is coaxially connected to a rotating shaft of the engine, wherein in the switching mechanism, at least one of the high side clutch and the low side clutch may be interposed on the input shaft so as to be located at a position overlapping the differential gear in a direction orthogonal to an axial direction.
(6) The transaxle device may further include: a counter shaft which is disposed on a power transmission path between the output shaft and an input shaft coaxially connected to a rotating shaft of the engine; and a casing which includes a cylindrical portion protruding from an attachment surface of the first rotating electric machine and the second rotating electric machine outward in an axial direction around the counter shaft so as not to interfere with the first rotating electric machine and the second rotating electric machine, wherein in the switching mechanism, at least one of the high side clutch and the low side clutch may be disposed inside the cylindrical portion.
(7) The transaxle device may further include: an input shaft which is coaxially connected to a rotating shaft of the engine; and a second rotating electric machine shaft which is coaxially connected to a rotating shaft of the second rotating electric machine, wherein the switching mechanism may include a component which rotates together with the input shaft, and wherein a gear which normally engages with a fixed gear fixed to the second rotating electric machine shaft may be fixed to the component.

### Advantageous Effects of Invention

It is possible to increase the traveling pattern by the switching mechanism for switching the high gear stage and the low gear stage. Further, it is possible to secure a space for connecting the drive shaft while suppressing an increase in size of the transaxle device based on the positional relationship between the high gear stage and the low gear stage.

### Brief Description of Drawings

Fig. 1 is a top view illustrating an internal configuration of a vehicle including a transaxle device according to an embodiment.
Fig. 2 is a schematic side view of a power train including the transaxle device of Fig. 1.
Fig. 3 is a cross-sectional view in which the transaxle device of Fig. 1 is cut in an axial direction along a power transmission path.
Fig. 4 is a skeleton diagram illustrating a power train including the transaxle device of Fig. 3.
Fig. 5 is a skeleton diagram illustrating a power train according to a first modified example.
Fig. 6 is a skeleton diagram illustrating a power train according to a second modified example.
Fig. 7 is a skeleton diagram illustrating a power train according to a third modified example.
Fig. 8 is a skeleton diagram illustrating a power train according to a fourth modified example.
Fig. 9 is a skeleton diagram illustrating a power train according to a fifth modified example.
Fig. 10 is a skeleton diagram illustrating a power train according to a sixth modified example.
Fig. 11 is a skeleton diagram illustrating a power train according to a seventh modified example.
Fig. 12 is a skeleton diagram illustrating a power train according to an eighth modified example.

### Description of Embodiments

A transaxle device of an embodiment will be described with reference to the drawings. Each of the following embodiments is merely an example and there is no intention to exclude the application of various modifications and techniques not mentioned in the following embodiments. The configurations of the embodiments can be modified into various forms without departing from the gist thereof. Further, the configurations can be appropriately selected or combined as appropriate.

### [1. Overall Configuration]

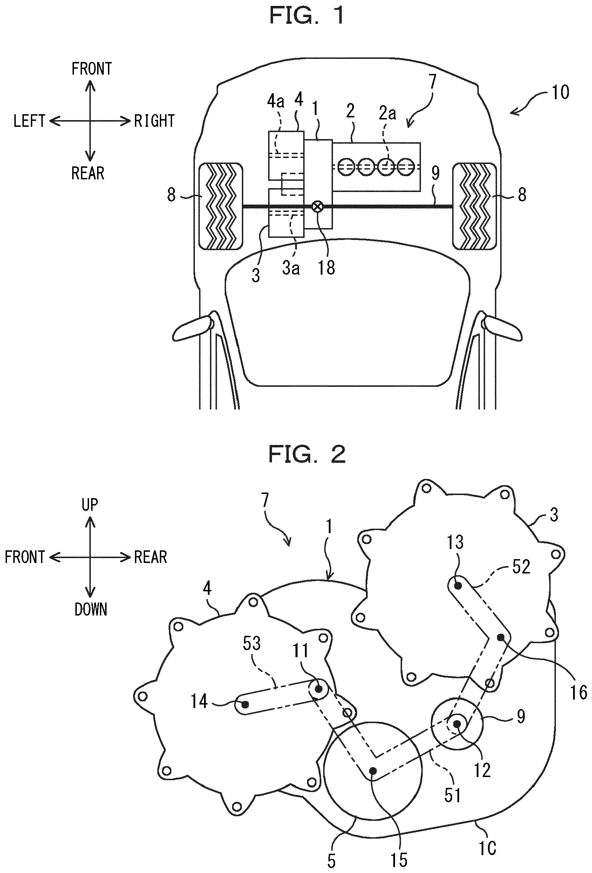

A transaxle 1 (a transaxle device) of the embodiment is applied to a vehicle 10 illustrated in Fig. 1. The vehicle 10 is a hybrid vehicle which includes an engine 2, a traveling motor 3 (an electric motor, a first rotating electric machine), and an electric power generator 4 (an electric power generator, a second rotating electric machine). The generator 4 is connected to the engine 2 and is operable independently from the operation state of the motor 3. Further, the vehicle 10 is provided with three traveling modes including an EV mode, a series mode, and a parallel mode. These traveling modes are alternatively selected in response to a vehicle state, a travel state, or a driver's request output by an electronic control device (not illustrated) and hence the engine 2, the motor 3, and the generator 4 can be separately used in response to the type. It is to be noted that, the motor 3 may have a power generation function (a function of a generator) and the generator 4 may have an electric motor function (a function of a motor).

The EV mode is a traveling mode in which the vehicle 10 is driven only by the motor 3 using charged power of a driving battery (not illustrated) while the engine 2 and the generator 4 are stopped. The EV mode is selected in a case in which the traveling load and the traveling speed are low or the battery charge level is high. The series mode is a traveling mode in which the vehicle 10 is driven by the motor 3 using power while driving the generator 4 to generate electric power by the engine 2. The series mode is selected in a case in which the traveling load and the traveling speed are intermediate or the battery charge level is low. The parallel mode is a traveling mode in which the vehicle 10 is mainly driven by the engine 2 and the driving of the vehicle 10 is assisted by the motor 3 as appropriate and is selected in a case in which the traveling load and the traveling speed are high.

The engine 2 and the motor 3 are connected in parallel to a drive wheel 8 through the transaxle 1 and the power of each of the engine 2 and the motor 3 is individually transmitted thereto. Further, the generator 4 and the drive wheel 8 are connected in parallel to the engine 2 through the transaxle 1 and the power of the engine 2 is also transmitted to the generator 4 in addition to the drive wheel 8.

The transaxle 1 is a power transmission device which is obtained by integrating a final drive (a final speed reducer) including a differential gear 18 (a differential device, hereinafter referred to as the "differential 18") and a transmission (a speed reducer) and includes a plurality of mechanisms which are in charge of transmission of power between a drive source and a driven device. The transaxle 1 of the embodiment is configured to be switchable between a high/low state (a high speed stage and a low speed stage). When the vehicle travels in the parallel mode, a high gear stage and a low gear stage are switched in response to the travel state or the request output by the electronic control device.

The engine 2 is an internal combustion engine (a gasoline engine or a diesel engine) which burns gasoline or light oil. The engine 2 is a so-called transverse engine in which a direction of a crankshaft 2a (a rotating shaft) is disposed laterally to be aligned with a vehicle width direction of the vehicle 10 and is fixed to the right side surface of the transaxle 1. The crankshaft 2a is disposed in parallel to a drive shaft 9 of the drive wheel 8. The operation state of the engine 2 is controlled by the electronic control device.

Both the motor 3 and the generator 4 are an electric power generator (a motor generator) which has a function of an electric motor and a function of an electric power generator. The motor 3 mainly functions as an electric motor to drive the vehicle 10 and functions as an electric power generator at the time of regeneration. The generator 4 functions as an electric motor (a starter) at the time of starting the engine 2 and generates electric power by the power of the engine at the time of operating the engine 2. An inverter (not illustrated) which converts a DC current and an AC current is provided in the periphery (or the inside) of each of the motor 3 and the generator 4. The rotation speed of each of the motor 3 and the generator 4 is controlled by controlling the inverter. The operation state of each of the motor 3, the generator 4, and each inverter is controlled by the electronic control device.

The motor 3 of the embodiment is formed such that an outer shape is formed in a cylindrical shape using a rotating shaft 3a as a center axis and is fixed to the left side surface (attachment surface) of the transaxle 1 in a posture in which a bottom surface thereof faces the transaxle 1. The generator 4 of the embodiment is formed such that an outer shape is formed in a cylindrical shape using a rotating shaft 4a as a center axis and is fixed to the left side surface of the transaxle 1 in a posture in which a bottom surface thereof faces the transaxle 1 similarly to the motor 3.

Fig. 2 is a side view when the engine 2, the motor 3, the generator 4, and a power train 7 including the transaxle 1 are viewed from the left side. The engine 2 is omitted in the side view. As illustrated in Fig. 2, a pump 5 is fixed to the left side surface of the transaxle 1 in addition to the motor 3 and the generator 4. The pump 5 is a hydraulic pressure generation device which pressure-feeds oil functioning as working oil or lubricating oil to a hydraulic circuit (not illustrated) using power of the drive wheel 8.

### [2. Transaxle]

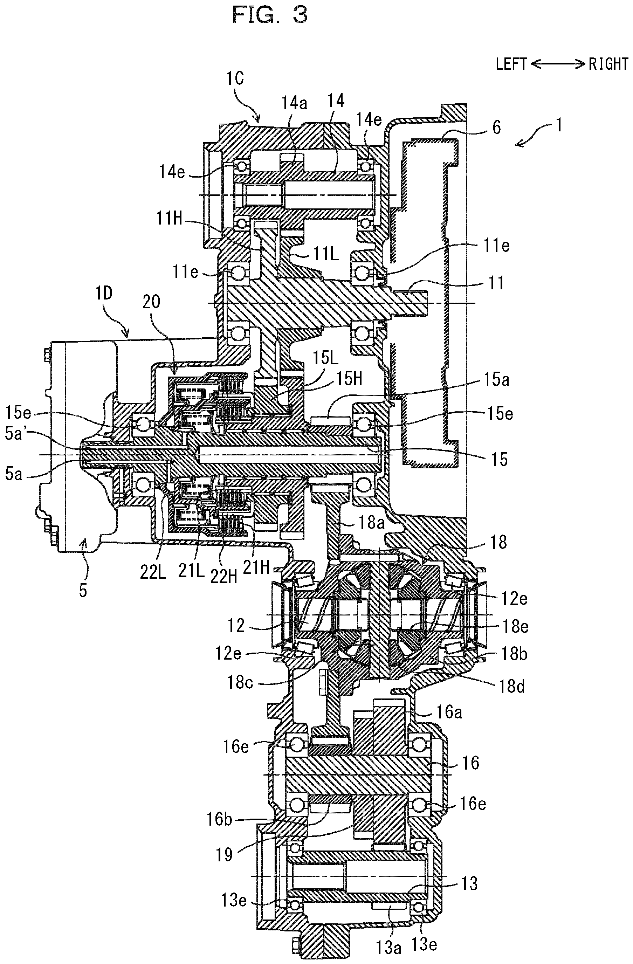

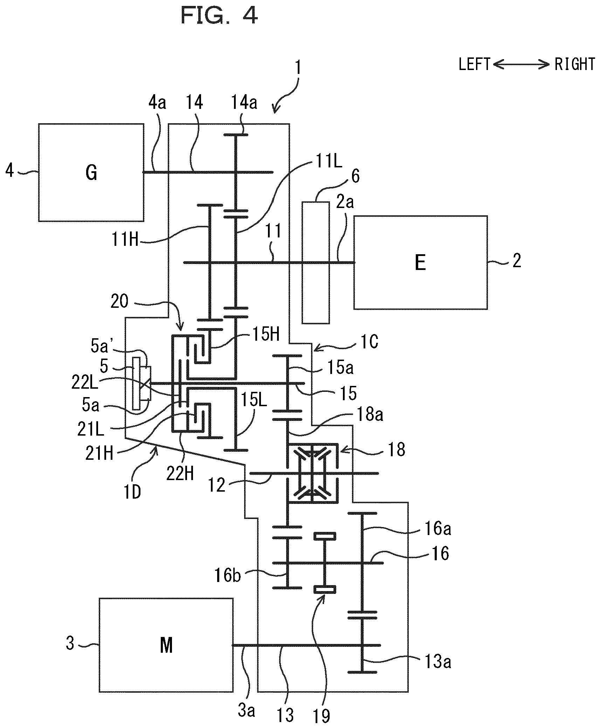

Fig. 3 is a cross-sectional view in which the transaxle 1 of the embodiment is cut in the axial direction along the power transmission path and Fig. 4 is a skeleton diagram of the power train 7 including the transaxle 1. In the skeleton diagram after Fig. 4, the pump 5 and the transaxle 1 are illustrated in an integrated state (a state in which the pump 5 is built in the casing 1C).

As illustrated in Figs. 2 to 4, the transaxle 1 is provided with six shafts 11 to 16 which are arranged in parallel. Hereinafter, a rotating shaft which is coaxially connected to the crankshaft 2a will be referred to as an input shaft 11. Similarly, rotating shafts which are coaxially connected to the drive shaft 9, the rotating shaft 3a of the motor 3, and the rotating shaft 4a of the generator 4 will be respectively referred to as an output shaft 12, a motor shaft 13 (a first rotating electric machine shaft), and a generator shaft 14 (a second rotating electric machine shaft). Further, a rotating shaft which is disposed on the power transmission path between the input shaft 11 and the output shaft 12 will be referred to as a first counter shaft 15 and a rotating shaft which is disposed on the power transmission path between the motor shaft 13 and the output shaft 12 will be referred to as a second counter shaft 16.

As illustrated in Fig. 3, both end portions of all of six shafts 11 to 16 are journaled to the casing 1C through bearings 11e to 16e. Further, an opening is formed in the side surface of the casing 1C located on each of the input shaft 11, the output shaft 12, the motor shaft 13, and the generator shaft 14 and the shafts are connected to the crankshaft 2a and the like through the opening. Furthermore, a torque limiter 6 having a function of protecting the power transmission mechanism by interrupting excessive torque is interposed on the crankshaft 2a. As illustrated in Fig. 4, the rotating shaft of the pump 5 is connected to the first counter shaft 15.

Three power transmission paths are formed inside the transaxle 1. Specifically, a power transmission path (hereinafter, referred to as a "first path 51") extending from the input shaft 11 to the output shaft 12, a power transmission path (hereinafter, referred to as a "second path 52") extending from the motor shaft 13 to the output shaft 12, and a power transmission path (hereinafter, referred to as a "third path 53") extending from the input shaft 11 to the generator shaft 14 are formed as indicated by a two-dotted chain line in Fig. 2.

The first path 51 (the first mechanism) is a path which involves in the transmission of power from the engine 2 to the drive wheel 8 and is in charge of the transmission of power during the operation of the engine 2. A switching mechanism 20 to be described later is interposed in the course of the first path 51 to switch a power transmission enabled/disabled state and a high/low state. The second path 52 (the second mechanism) is a path which involves in the transmission of power from the motor 3 to the drive wheel 8 and is in charge of the transmission of power of the motor 3. The third path 53 (the third mechanism) is a path which involves in the transmission of power from the engine 2 to the generator 4 and is in charge of the transmission of power at the time of starting the engine and generating electric power by the engine 2.

Next, a configuration of the transaxle 1 will be described in detail with reference to Figs. 3 and 4. In the following description, the "fixed gear" means a gear which is integrated with the shaft and is not rotatable relative to the shaft. Further, the "idle gear" means a gear which is pivotally supported to the shaft so as to be relatively rotatable.

The input shaft 11 is provided with two fixed gears 11H and 11L. Two fixed gears 11H and 11L have different number of teeth and respectively normally engage with two idle gears 15H and 15L provided in the first counter shaft 15 to have different number of teeth.

In the embodiment, one fixed gear 11L having a small number of teeth is disposed at the right side (the side of the differential 18) and the other fixed gear 11H having a large number of teeth is disposed at the left side (the opposite side to the differential 18 with respect to one fixed gear 11L). One fixed gear 11L having a small number of teeth engages with one idle gear 15L having a large number of teeth to form the low gear stage. In contrast, the other fixed gear 11H having a large number of teeth engages with the other idle gear 15H having a small number of teeth to form the high gear stage. It is to be noted that, the fixed gear 11L normally engages with the fixed gear 14a provided in the generator shaft 14 and transmits power between the engine 2 and the generator 4.

In the first counter shaft 15, the idle gear 15L having a large diameter is disposed at a position close to the differential 18 and the idle gear 15H having a small diameter is disposed at a position away from the differential 18. Since the first counter shaft 15 is near (adjacent to) the output shaft 12 having the differential 18 interposed therein, for example, a portion along the first counter shaft 15 in the casing 1C can be decreased in diameter in an outward direction (a direction moving away from the differential 18) in accordance with the arrangement of the gears. Alternatively, when a casing side surface provided with the opening of the output shaft 12 is provided between the idle gear 15L having a large diameter and the idle gear 15H having a small diameter, a portion along the first counter shaft 15 in the casing 1C can be decreased in size on the whole. With such a configuration, a space for connecting the drive shaft 9 is secured on the extension line of the output shaft 12 outside the casing 1C.

The casing 1C of the embodiment includes a cylindrical portion 1D which is provided on the left side surface attached with the motor 3 and the generator 4 so as to protrude outward (leftward) in the axial direction around the first counter shaft 15. The cylindrical portion 1D is a part of the cylindrical casing 1C and is formed to have an arrangement and a shape so as not to interfere with the motor 3 and the generator 4. The cylindrical portion 1D is disposed inside an area between the rotating shaft 3a (the motor shaft 13) of the motor 3 and the rotating shaft 4a (the generator shaft 14) of the generator 4 when the power train 7 is viewed from the left side (in a side view). Here, "the area" above mentioned means an area which is orthogonal to a line connecting two shafts 3a and 4a and interposed between two lines passing through the shafts 3a and 4a in a side view. Further, the pump 5 is attached to the outer end face (the left end face) of the cylindrical portion 1D.

Two idle gears 15H and 15L of the embodiment are disposed on the same shaft (the first counter shaft 15) and form a double pipe structure. Specifically, a right portion of the low side idle gear 15L is provided with a tooth surface portion which engages with the fixed gear 11L and an engagement component 21L of the switching mechanism 20 is fixed to a front end of the cylindrical portion 1D protruding from the left side of the tooth surface portion (that is, a left portion of the idle gear 15L). Further, in the high side idle gear 15H, the engagement component 21H of the switching mechanism 20 is fixed to the left side of the tooth surface portion engaging with the fixed gear 11H. Furthermore, the idle gear 15H is pivotally supported by the outer periphery of the cylindrical portion 1D of the low side idle gear 15L so as to be relatively rotatable.

The switching mechanism 20 is used to control the power connection/disconnection state of the engine 2 and to switch the high gear stage and the low gear stage and is disposed inside the cylindrical portion 1D while being interposed in the first counter shaft 15. The switching mechanism 20 of the embodiment is obtained by a combination of a high side multiple disc type clutch (a high side clutch) which connects or disconnects the high gear stage in the first path 51 and a low side multiple disc type clutch (a low side clutch) which connects or disconnects the low gear stage in the first path 51 as an integrated object. The working hydraulic pressure of each clutch is supplied from each of two oil passage inlets 5a and 5a' provided in the first counter shaft 15.

The switching mechanism 20 of the embodiment includes two engagement components 21H and 22H constituting the high side clutch and two engagement components 21L and 22L constituting the low side clutch. The drive-side engagement components 21H and 21L are respectively fixed to two idle gears 15H and 15L and receive power from the engine 2. Meanwhile, the driven-side engagement components 22H and 22L are respectively fixed to the first counter shaft 15 and output power to the drive wheel 8. Each of the high side engagement components 21H and 22H and the low side engagement components 21L and 22L is driven in a separating direction (a disengagement direction) and an approaching direction (an engagement direction) in response to the hydraulic pressure of the oil flowing from the oil passage inlets 5a' and 5a. It is to be noted that, a pressure adjuster which adjusts the hydraulic pressure of the oil pressure-fed from the pump 5 to an appropriate pressure may be provided in a hydraulic pressure circuit. The pressure adjuster includes, for example, a plurality of solenoid valves (an on/off solenoid valve, a linear solenoid valve, and the like).

When all of the engagement components 21H, 22H, 21L, and 22L of the switching mechanism 20 are disengaged, all of two idle gears 15H and 15L enter an idle rotation state. In this case, even when the engine 2 is operated, the power of the engine 2 (the rotation of the input shaft 11) is not transmitted to the output shaft 12. That is, in this case, the transmission of the power of the engine 2 to the drive wheel 8 is interrupted. Meanwhile, when one of the high and low side clutches of the switching mechanism 20 is engaged and the other thereof is disengaged, the high gear stage or the low gear stage is selected and the power of the engine 2 is transmitted to the output shaft 12.

That is, when the high side clutch engagement components 21H and 22H are engaged and the low side clutch engagement components 21L and 22L are disengaged, the high gear stage is selected. In this case, the power of the engine 2 is transmitted to the drive wheel 8 through the fixed gear 11H and the idle gear 15H. In contrast, when the low side clutch engagement components 21L and 22L are engaged and the high side clutch engagement components 21H and 22H are disengaged, the low gear stage is selected. In this case, the power of the engine 2 is transmitted to the drive wheel 8 through the fixed gear 11L and the idle gear 15L.

In the first counter shaft 15, the fixed gear 15a is provided near the right side of the low side idle gear 15L. The fixed gear 15a normally engages with the ring gear 18a of the differential 18 provided in the output shaft 12.

Further, the second counter shaft 16 is provided with two fixed gears 16a and 16b and a parking gear 19. The fixed gear 16a which is disposed near the right side surface of the casing 1C normally engages with a fixed gear 13a provided in the motor shaft 13. Meanwhile, the fixed gear 16b which is disposed near the left side surface of the casing 1C normally engages with the ring gear 18a of the differential 18. That is, the power of the motor 3 is transmitted to the output shaft 12 through the fixed gears 13a, 16a, and 16b and the differential 18.

The parking gear 19 is a component constituting the parking lock device and is fixed to the second counter shaft 16. When a P range is selected by a driver, the parking gear 19 engages with a parking sprag (not illustrated) to prohibit the rotation of the second counter shaft 16 (that is, the output shaft 12).

As illustrated in Fig. 3, the differential 18 transmits the power transmitted to the ring gear 18a to the output shaft 12 through a differential casing 18b, a pinion shaft 18c, a differential pinion 18d, and a side gear 18e.

### [3. Operation and Effect]

(1) The above-described transaxle 1 is provided with the switching mechanism 20 and the high gear stage and the low gear stage are switched in response to the travel state or the request output when the vehicle travels in the parallel mode. That is, since the power of the engine 2 can be transmitted (output) while being switched into two levels in the parallel mode, it is possible to increase the traveling pattern and to obtain the effect of improving the drivability and the fuel economy and improving the vehicle merchantability.
   Further, in the above-described transaxle 1, the high gear stage (the fixed gear 11H, the idle gear 15H) is disposed on the opposite side to the differential 18 with respect to the low gear stage (the fixed gear 11L, the idle gear 15L) inside the casing 1C. That is, since a gear (the idle gear 15L) having a large diameter is disposed at a position close to the differential 18 and a gear (the idle gear 15H) having a small diameter is disposed at a position away from the differential 18 on the shaft (the first counter shaft 15) near the output shaft 12, a portion along the first counter shaft 15 in the casing 1C can be decreased in diameter or size on the whole, for example, in an outward direction (a direction moving away from the differential 18). That is, according to the above-described transaxle 1, it is possible to secure a space for connecting the drive shaft 9 on the extension line of the output shaft 12 outside the casing 1C while suppressing an increase in size of the transaxle 1.
   Further, in the above-described vehicle 10, since the respective outputs of the power of the engine 2 and the power of the motor 3 are provided the torque omission generated at the time of switching the high/low state can be covered with the power of the motor 3. Accordingly, a shift shock can be suppressed.
(2) In the above-described transaxle 1, since the high/low state is switched by the switching mechanism 20 including the high side clutch and the low side clutch, a configuration can be simplified.
(3) Further, in the above-described transaxle 1, since the switching mechanism 20 is obtained by a combination of the high side clutch and the low side clutch as an integrated object, the transaxle 1 can be compact.
(4) In the above-described transaxle 1, the switching mechanism 20 is disposed inside the cylindrical portion 1D of the casing 1C. Since the cylindrical portion 1D is a portion protruding from the left side surface attached with the motor 3 and the generator 4 and is provided so as not to interfere with the motor 3 and the generator 4, it is possible to assemble the switching mechanism 20 to the transaxle 1 without increasing the size of the power train 7 by providing the switching mechanism 20 inside the cylindrical portion 1D.

### [4. Modified Examples]

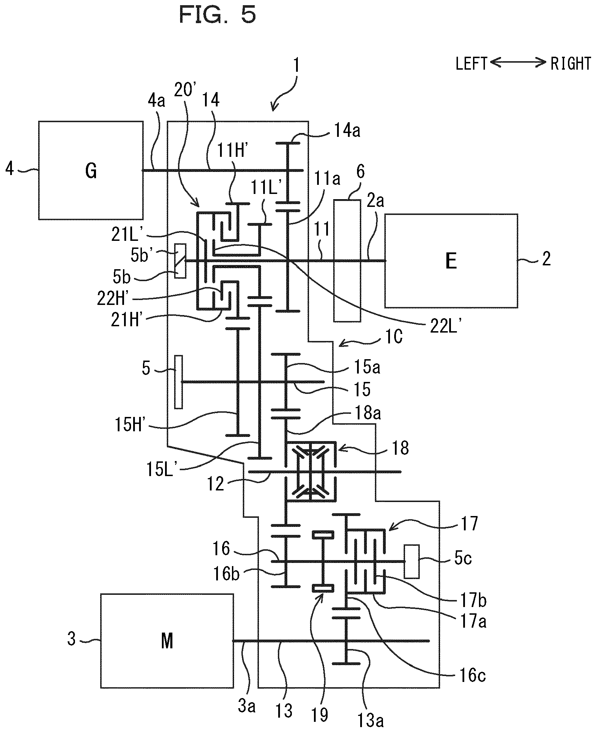

The above-described transaxle 1 is an example and a configuration thereof is not limited to the above-described configuration. Hereinafter, modified examples of the transaxle 1 will be described with reference to Figs. 5 to 12. Figs. 5 to 12 are skeleton diagrams illustrating the power train 7 including the transaxle 1 according to first to eighth modified examples. In the components of the above-described embodiment or the modified examples, the same reference numerals as those of the above-described embodiment or the modified examples or the similar reference numerals (reference numerals having the same numbers and different alphabets) will be given to the components and a repetitive description thereof will be omitted.

### [4-1. First Modified Example]

As illustrated in Fig. 5, the transaxle 1 according to the first modified example has the same configuration as that of the above-described embodiment except that the arrangement of idle gears 11H' and 11L' and a switching mechanism 20' is different. In the modified example, all of the high side idle gear 11H' and the low side idle gear 11L' are provided in the input shaft 11 to form a double pipe structure and the switching mechanism 20' is interposed on the same shaft (the input shaft 11).

The high side idle gear 11H' is disposed on the opposite side (the left side) of the differential 18 with respect to the low side idle gear 11L' and normally engages with a high side fixed gear 15H' provided in the first counter shaft 15. The low side idle gear 11L' is disposed near the fixed gear 11a provided in the input shaft 11 and normally engages with a low side fixed gear 15L' provided in the first counter shaft 15. It is to be noted that, the fixed gear 11a is disposed near the right side surface of the casing 1C and normally engages with the fixed gear 14a of the generator shaft 14. That is, the input shaft 11 and the generator shaft 14 are connected to each other through two fixed gears 11a and 14a so that power can be transmitted between the engine 2 and the generator 4.

The switching mechanism 20' of the modified example is obtained by a combination of the high side clutch and the low side clutch as an integrated object. In the switching mechanism 20', all of drive-side engagement components 21H' and 21L' are fixed to the input shaft 11 and driven-side engagement components 22H' and 22L' are respectively fixed to the idle gears 11H' and 11L'. Each of the high side clutch engagement components 21H' and 22H' and the low side clutch engagement components 21L' and 22L' receives oil pressure-fed from the pump 5 through oil passage inlets 5b and 5b' provided in the input shaft 11 and is driven in a separating direction (a disengagement direction) and an approaching direction (an engagement direction) in response to the hydraulic pressure (or the adjusted hydraulic pressure).

When all of the engagement components 21H', 22H', 21L', and 22L' of the switching mechanism 20' are disengaged, all of two idle gears 11H' and 11L' enter an idle rotation state, so that the transmission of the power of the engine 2 to the drive wheel 8 is interrupted. Meanwhile, when any one of the high side clutch and the low side clutch is engaged and the other thereof is disengaged, the high gear stage or the low gear stage is selected, so that the power of the engine 2 is transmitted to the output shaft 12. Also in such a configuration, the same effect as that of the above-described embodiment can be obtained.

In the transaxle 1 according to the modified example, a connection/disconnection mechanism which enables or disables the transmission of the power from the motor 3 is provided on the second counter shaft 16 in the course of the second path 52. The connection/disconnection mechanism includes an idle gear 16c and a motor side clutch 17. The idle gear 16c is fixed to a first engagement component 17a of the motor side clutch 17 and normally engages with the fixed gear 13a provided in the motor shaft 13 so as to rotate while following the rotation of the motor shaft 13. The motor side clutch 17 is a multiple disc type clutch which controls the power connection/disconnection state of the motor 3 and includes a first engagement component 17a and a second engagement component 17b fixed to the second counter shaft 16. The motor side clutch 17 is disposed near the right side surface of the casing 1C.

The first engagement component 17a is one to which power is input from the motor 3 and the second engagement component 17b is one which outputs power to the drive wheel 8. These engagement components 17a and 17b receive oil pressure-fed from the pump 5 through the oil passage inlet 5c and are driven in a separating direction (a disengagement direction) and an approaching direction (an engagement direction) in response to the hydraulic pressure (or the adjusted hydraulic pressure). When the motor side clutch 17 is engaged, the power of the motor 3 is transmitted to the drive wheel 8 through the fixed gear 13a and the idle gear 16c and the rotation of the drive wheel 8 is transmitted to the motor 3. That is, in a state in which the motor side clutch 17 is engaged, power running and regenerative power generation by the motor 3 becomes possible.

In contrast, when the motor side clutch 17 is disengaged while the vehicle 10 travels by the engine 2 (while the motor 3 is stopped), the idle gear 16c idly rotates, so that the rotation of the drive wheel 8 is not transmitted to the motor 3. Accordingly, since the motor 3 is not rotated, a resistance becomes small. It is to be noted that, an electric coupling may be provided instead of the pump 5 and the multiple disc type motor side clutch 17 to serve as a connection/disconnection mechanism which controls the power connection/disconnection state by an electronic control device. When such a connection/disconnection mechanism is provided, it is possible to prevent the motor 3 from rotating together and to reduce running resistance.

It is to be noted that, the connection/disconnection mechanism is not an indispensable configuration and may be omitted. Further, in the modified example, the parking gear 19 is provided in the second counter shaft 16, but the arrangement of the parking gear 19 is not limited thereto.

### [4-2. Second Modified Example]

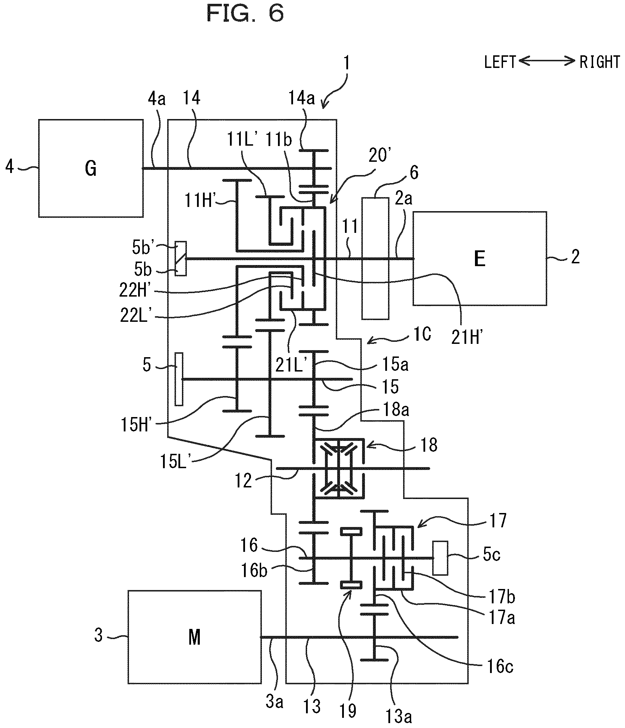

As illustrated in Fig. 6, the transaxle 1 according to the second modified example is different from that of the first modified example (Fig. 5) in that a positional relationship of the switching mechanism 20' and the idle gears 11H' and 11L' is different and a gear for transmitting power to the generator 4 is different. That is, also in the modified example, the switching mechanism 20'and the idle gears 11H' and 11L' are provided in the input shaft 11, but have a different positional relationship. Further, the gear 11b is provided instead of the fixed gear 11a of the first modified example.

In the modified example, the switching mechanism 20' is disposed near the right side surface inside the casing 1C and two idle gears 11H' and 11L' are disposed at the left side of the switching mechanism 20'. Specifically, the switching mechanism 20' is disposed at a position overlapping the ring gear 18a of the differential 18 in a direction (hereinafter, referred to as a "width direction") orthogonal to the axial direction. As illustrated in Fig. 3, the fixed gear 15a of the first counter shaft 15 engages with the ring gear 18a of the differential 18. For this reason, when a gear (for example, the fixed gear 11L) engaging with other gears (for example, the idle gear 15L) of the first counter shaft 15 is provided in the input shaft 11, the gear can be disposed only at a position offset from the ring gear 18a in the width direction. That is, a space in the periphery of the input shaft 11 overlapping the differential 18 (in particular, the ring gear 18a) in the width direction easily becomes a dead space.

In contrast, as illustrated in Fig. 6, the switching mechanism 20' of the modified example is disposed in the dead space. Further, the low side idle gear 11L' is disposed near the left side of the switching mechanism 20' and the high side idle gear 11H' is disposed near the left side of the idle gear 11L' (on the opposite side to the differential 18 with respect to the low gear stage). All of the idle gears 11H' and 11L' include tooth surface portions respectively formed at the left portions thereof to engage with the fixed gears 15H' and 15L' and respectively include the driven-side engagement component 22H' and 22L' of the switching mechanism 20' formed at the right portions thereof.

The drive-side engagement components 21H' and 21L' of the switching mechanism 20' are fixed to the input shaft 11. In the modified example, the gear 11b which normally engages with the fixed gear 14a of the generator shaft 14 is fixed to the outer peripheral surface of the clutch pack corresponding to the engagement component 21L' rotating together with the input shaft 11. That is, the input shaft 11 and the generator shaft 14 are connected through the gear 11b and the fixed gear 14a so that power can be transmitted between the engine 2 and the generator 4.

Thus, also in the transaxle 1 according to the modified example, the same effect as that of the above-described embodiment can be obtained. Further, a space in which the switching mechanism 20' of the modified example is disposed becomes a dead space in the conventional structure. For this reason, in the transaxle 1 of the modified example, a dead space can be efficiently used and space efficiency inside the casing 1C can be improved. Furthermore, since the gear 11b transmitting power to the generator 14 is fixed to the clutch pack (the engagement component 21L'), the axial dimension of the input shaft 11 can be shortened and the transaxle 1 can be made compact.

The switching mechanism 20' may be disposed at a position overlapping a component (for example, the differential casing 18b or the differential pinion 18d) other than the ring gear 18a of the differential 18 in the width direction. Further, the fixed gear 11a of the above-described first modified example may be provided in the input shaft 11 instead of fixing the gear 11b to the outer periphery of the engagement component 21L' (the clutch pack) of the switching mechanism 20'.

### [4-3. Third Modified Example]

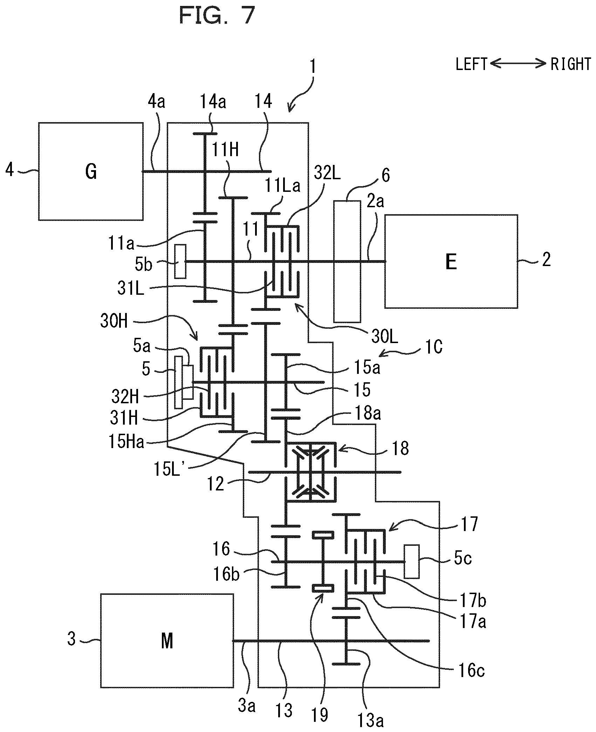

As illustrated in Fig. 7, the transaxle 1 according to the third modified example is different from that of the first modified example (Fig. 5) in that the switching mechanism includes a high side clutch 30H and a low side clutch 30L respectively interposed in different shafts. The high side clutch 30H is disposed near the left side surface of the first counter shaft 15 and the low side clutch 30L is disposed at a position close to the right side surface of the input shaft 11 and overlapping the ring gear 18a of the differential 18 in the width direction.

In the input shaft 11, an idle gear 11La is provided near the left side of the low side clutch 30L. Further, the high side fixed gear 11H and the fixed gear 11a are provided at the left side of the idle gear 11La. In the first counter shaft 15, an idle gear 15Ha is provided near the right side of the high side clutch 30H. Furthermore, the low side fixed gear 15L' and the fixed gear 15a are provided at the right side of the idle gear 15Ha. The high side clutch 30H includes a drive-side engagement component 31H fixed to the left side of the idle gear 15Ha and a driven-side engagement component 32H fixed to the first counter shaft 15. The low side clutch 30L includes a drive-side engagement component 31L fixed to the input shaft 11 and a driven-side engagement component 32L fixed to the right side of the idle gear 11La.

The engagement components 31H and 32H of the high side clutch 30H and the engagement components 31L and 32L of the low side clutch 30L respectively receive oil pressure-fed from the pump 5 through the oil passage inlets 5a and 5b and are driven in a separating direction (a disengagement direction) and an approaching direction (an engagement direction) in response to the hydraulic pressure (or the adjusted hydraulic pressure). When the high side clutch 30H is engaged and the low side clutch 30L is disengaged, the high gear stage is selected. In this case, the power of the engine 2 is transmitted to the drive wheel 8 through the fixed gear 11H and the idle gear 15Ha. In contrast, when the low side clutch 30L is engaged and the high side clutch 30H is disengaged, the low gear stage is selected. In this case, the power of the engine 2 is transmitted to the drive wheel 8 through the idle gear 11La and the fixed gear 15L'.

Thus, also in the transaxle 1 according to the modified example, it is possible to obtain the effect (1) of the above-described embodiment. Further, similarly to the above-described second modified example, it is possible to efficiently use a dead space and to improve space efficiency inside the casing 1C.

In the modified example, the low side clutch 30L may be disposed at a position overlapping a component (for example, the differential casing 18b or the differential pinion 18d) other than the ring gear 18a of the differential 18 in the width direction.

### [4-4. Fourth Modified Example]

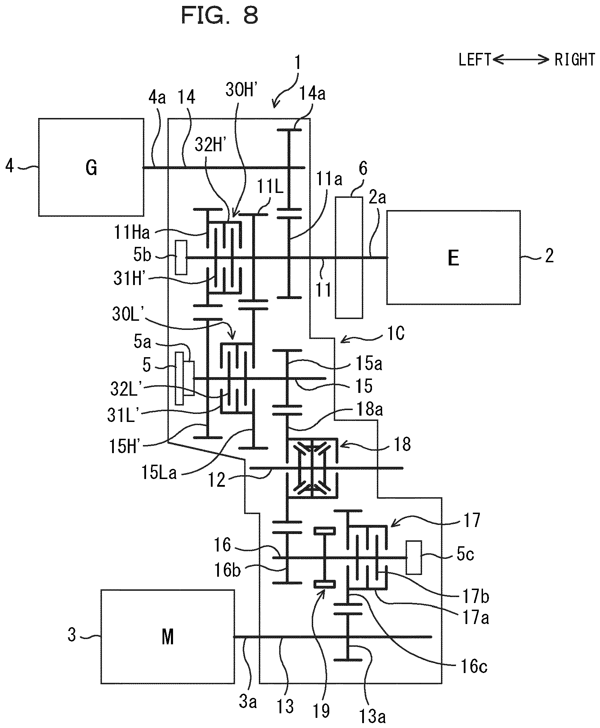

As illustrated in Fig. 8, the transaxle 1 according to the fourth modified example is different from that of the third modified example (Fig. 7) in that the arrangement of two clutches 30H' and 30L' of the switching mechanism and the arrangement of the idle gears 11Ha and 15La are different. That is, in the modified example, the input shaft 11 is provided with the fixed gears 11a and 11L and the high side clutch 30H'and the idle gear 11Ha. Further, the first counter shaft 15 is provided with the fixed gears 15a and 15H' and the low side clutch 30L'and the idle gear 15La.

The high side clutch 30H' includes a drive-side engagement component 31H' fixed to the input shaft 11 and a driven-side engagement component 32H' fixed to the right side of the high side idle gear 11Ha. The low side clutch 30L' includes a drive-side engagement component 31L' fixed to the left side of the low side idle gear 15La and a driven-side engagement component 32L' fixed to the first counter shaft 15. These engagement components 31H', 32H', 31L', and 32L' are engaged or disengaged in response to the hydraulic pressure similarly to the above-described third modified example.

In the modified example, the idle gear 11Ha and the fixed gear 15H' forming the high gear stage are disposed near the left side surface of the casing 1C and the fixed gear 11a normally engaging with the fixed gear 14a of the generator shaft 14 is disposed near the right side surface thereof. Further, the high side clutch 30H' is interposed at the right side of the idle gear 11Ha and the fixed gear 11L and the idle gear 15La forming the low gear stage are disposed between the clutch 30H' and the fixed gear 11a. Meanwhile, the low side clutch 30L' is interposed at the left side of the idle gear 15La and is interposed at a position overlapping the high side clutch 30H' in the width direction.

Thus, also in the transaxle 1 according to the modified example, since the high gear stage is disposed on the opposite side to the differential 18 with respect to the low gear stage, it is possible to obtain the effect (1) of the above-described embodiment. Further, in the modified example, the high side idle gear 11Ha and the low side idle gear 15La are disposed on different shafts and two clutches 30H' and 30L' coaxial to the idle gears 11Ha and 15La are interposed at an overlapping position in the width direction. For this reason, the axial dimension (the entire length) of the transaxle 1 can be shortened and the transaxle 1 can be made compact.

### [4-5. Fifth Modified Example]

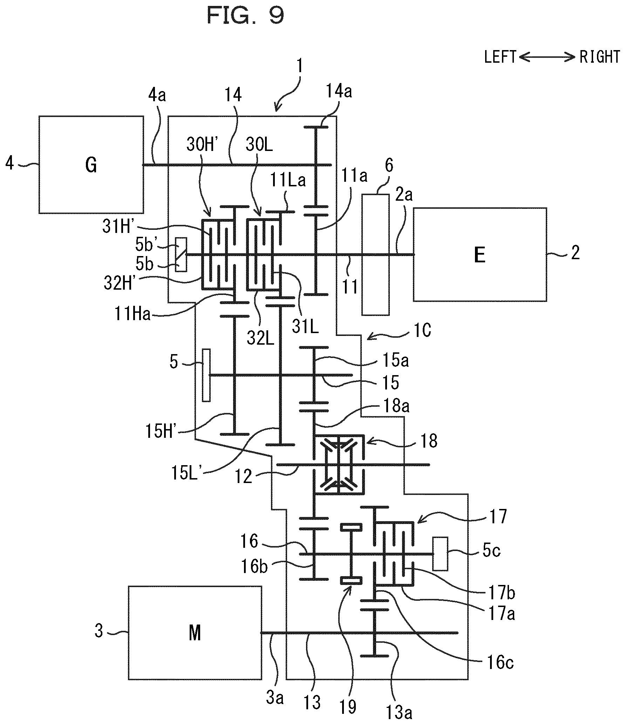

As illustrated in Fig. 9, the transaxle 1 according to the fifth modified example is different from those of the third modified example (Fig. 7) and the fourth modified example (Fig. 8) in that all of the idle gears 11Ha and 11La and two clutches 30H' and 30L of the switching mechanism are provided in the input shaft 11. That is, in the modified example, the low gear stage (the idle gear 11La, the fixed gear 15L') is disposed at the left side of the fixed gear 11a provided near the right side surface of the casing 1C on the input shaft 11 and the low side clutch 30L is interposed at the left side of the idle gear 11La. Further, the high gear stage (the idle gear 11Ha, the fixed gear 15H') is disposed at the left side of the low gear stage and the high side clutch 30H' is interposed at the left side of the idle gear 11Ha.

In the modified example, the driven-side engagement components 32H' and 32L of the high and low side clutches 30H' and 30L are respectively fixed to the left side of the idle gears 11Ha and 11La. These engagement components 32H' and 32L may be fixed to the right side of the idle gears 11Ha and 11La similarly to the third and fourth modified examples. Also in such a configuration, it is possible to obtain the effect (1) of the above-described embodiment.

### [4-6. Sixth Modified Example]

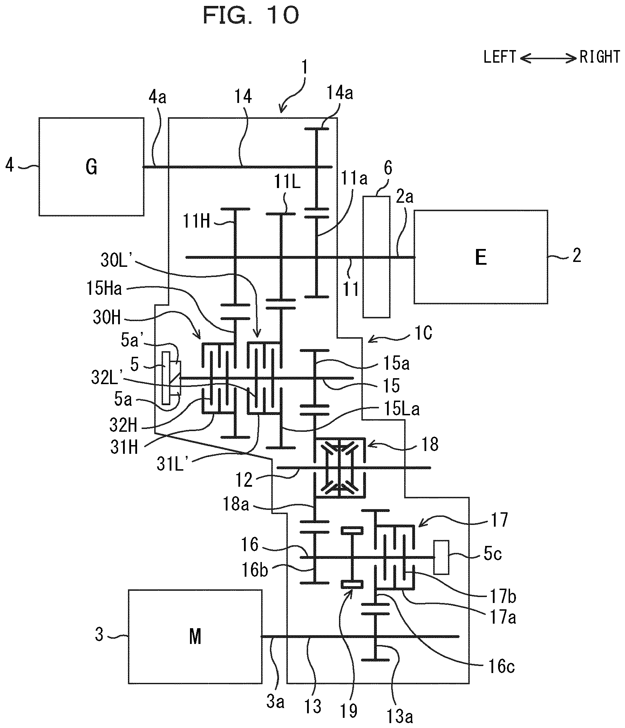

As illustrated in Fig. 10, the transaxle 1 according to the sixth modified example is different from that of the fifth modified example (Fig. 9) in that all of the idle gears 15Ha and 15La and two clutches 30H and 30L' of the switching mechanism are provided in the first counter shaft 15. That is, in the modified example, the low gear stage (the fixed gear 11L, the idle gear 15La) is disposed at the left side of the fixed gear 11a provided near the right side surface of the casing 1C on the input shaft 11 and the high gear stage (the fixed gear 11H, the idle gear 15Ha) is disposed at the left side of the low gear stage. The clutches 30H and 30L' are respectively interposed at the left side of the idle gears 15Ha and 15La. Also in such a configuration, it is possible to obtain the effect (1) of the above-described embodiment.

### [4-7. Seventh Modified Example]

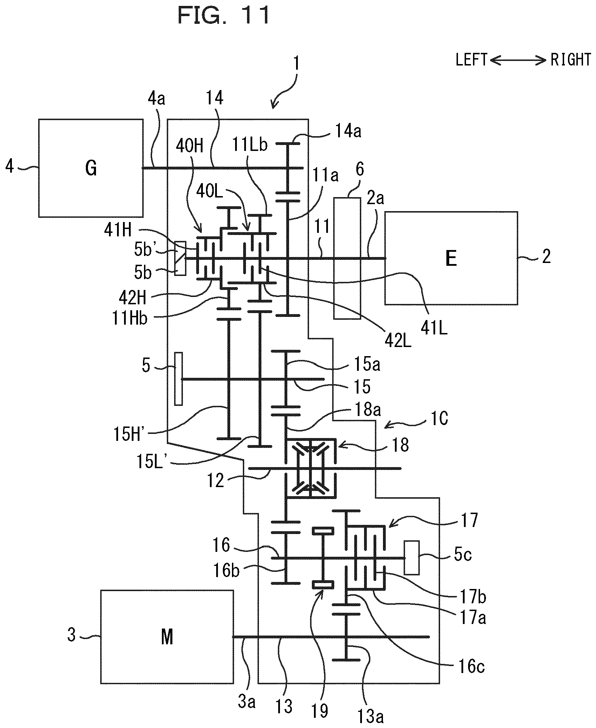

As illustrated in Fig. 11, the transaxle 1 according to the seventh modified example is different from the fifth modified example (Fig. 9) in that the positions of clutches 40H and 40L with respect to idle gears 11Hb and 11Lb are different. In the modified example, the inner diameters of the idle gears 11Hb and 11Lb are formed to be large as compared with the above-described embodiment or the first to sixth modified examples and the clutches 40H and 40L are respectively disposed at the inside in the radial direction (hereinafter, referred to as the "inside") of the idle gears 11Hb and 11Lb.

The switching mechanism of the modified example is also used to control the power connection/disconnection state of the engine 2 and to switch the high gear stage and the low gear stage and includes the high side clutch 40H and the low side clutch 40L all formed as the multiple disc type clutch. The high side clutch 40H includes a drive-side engagement component 41H fixed to the input shaft 11 and a driven-side engagement component 42H fixed to the inside of the idle gear 11Hb forming the high gear stage. Further, the low side clutch 40L includes a drive-side engagement component 41L fixed to the input shaft 11 and a driven-side engagement component 42L fixed to the inside of the idle gear 11Lb forming the low gear stage. These engagement components 41H, 42H, 41L, and 42L are engaged or disengaged in response to the hydraulic pressure similarly to the above-described modified example.

Thus, also in the transaxle 1 according to the modified example, it is possible to obtain the effect (1) of the above-described embodiment. Further, according to the configuration of the modified example, since the clutches 40H and 40L are provided inside the idle gears 11Hb and 11Lb, the axial dimension can be shortened and the transaxle 1 can be made compact.

### [4-8. Eighth Modified Example]

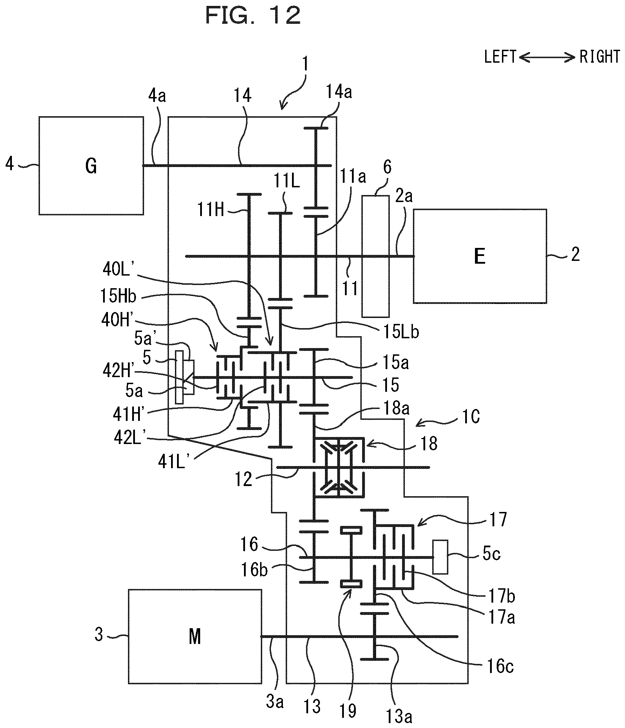

As illustrated in Fig. 12, the transaxle 1 according to the eighth modified example is different from that of the seventh modified example (Fig. 11) in that the arrangement of idle gears 15Hb and 15Lb and clutches 40H' and 40L' is different. In the modified example, all of the idle gears 15Hb and 15Lb are provided in the first counter shaft 15 and the clutches 40H' and 40L' are respectively disposed inside the idle gears 15Hb and 15Lb.

The high side clutch 40H' includes a drive-side engagement component 41H' fixed to the inside of the idle gear 15Hb forming the high gear stage and a driven-side engagement component 42H' fixed to the first counter shaft 15. Further, the low side clutch 40L' includes a drive-side engagement component 41L' fixed to the inside of the idle gear 15Lb forming the low gear stage and a driven-side engagement component 42L' fixed to the first counter shaft 15. These engagement components 41H', 42H', 41L', and 42L' are engaged or disengaged in response to the hydraulic pressure similarly to the above-described other modified examples. Also in such a configuration, the same effect as that of the above-described seventh modified example can be obtained.

### [5. Others]

While the embodiment and the modified examples of the invention have been described, the invention is not limited to the above-described embodiment and the like and can be modified into various forms without departing from the gist of the invention.

For example, the transaxle 1 of the above-described modified examples is provided with the connection/disconnection mechanism, but as in the above-described embodiment, it is possible that the connection/disconnection mechanism is not provided. Further, the position of the parking gear 19 is not particularly limited and can be appropriately set.

All of the above-described switching mechanisms include the high side clutch and the low side clutch, but the high gear stage and the low gear stage may be switched by using a sleeve or a planetary gear instead of the clutch.

Further, the relative positions of the engine 2, the motor 3, the generator 4, and the pump 5 with respect to the transaxle 1 are not limited to the above-described examples. In response to the relative positions, the arrangement of six shafts 11 to 16 inside the transaxle 1 may be set. Furthermore, the arrangement of the gears provided in the shafts inside the transaxle 1 is also exemplary and is not limited to the above-described example.

### Reference Signs List

1 TRANSAXLE (TRANSAXLE DEVICE)
1C CASING
1D CYLINDRICAL PORTION
2 ENGINE
2a CRANKSHAFT (ROTATING SHAFT)
3 MOTOR (ELECTRIC MOTOR, FIRST ROTATING ELECTRIC MACHINE)
4 GENERATOR (ELECTRIC POWER GENERATOR, SECOND ROTATING ELECTRIC MACHINE)
4a ROTATING SHAFT
8 DRIVE WHEEL
10 VEHICLE
11 INPUT SHAFT
11b GEAR
12 OUTPUT SHAFT
14 GENERATOR SHAFT (SECOND ROTATING ELECTRIC MACHINE SHAFT)
15 FIRST COUNTER SHAFT (COUNTER SHAFT)
18 DIFFERENTIAL (DIFFERENTIAL GEAR)
20, 20' SWITCHING MECHANISM
30H, 30H', 40H, 40H' HIGH SIDE CLUTCH (SWITCHING MECHANISM)
30L, 30L', 40L, 40L' LOW SIDE CLUTCH (SWITCHING MECHANISM)
51 FIRST PATH (POWER TRANSMISSION PATH)

## Claims

1. A transaxle device for a hybrid vehicle including an engine, a first rotating electric machine, and a second rotating electric machine and operable to individually transmit power of the engine and power of the first rotating electric machine to an output shaft on a drive wheel side and also to transmit the power of the engine to the second rotating electric machine, the transaxle device comprising:
a differential gear which is interposed in the output shaft; and
a switching mechanism which is interposed on a power transmission path from the engine to the output shaft and switches a high gear stage and a low gear stage, and
wherein the high gear stage is disposed on the opposite side to the differential gear with respect to the low gear stage inside a casing of the transaxle device.

2. The transaxle device according to claim 1,
wherein the switching mechanism includes a high side clutch which connects or disconnects the high gear stage in the power transmission path and a low side clutch which connects or disconnects the low gear stage in the power transmission path.

3. The transaxle device according to claim 2,
wherein the switching mechanism is obtained by a combination of the high side clutch and the low side clutch as an integrated object.

4. The transaxle device according to claim 2,
wherein in the switching mechanism, the high side clutch and the low side clutch are interposed on different shafts so as to be located at a position overlapping each other in a direction orthogonal to an axial direction.

5. The transaxle device according to any one of claims 2 to 4, further comprising:
an input shaft which is coaxially connected to a rotating shaft of the engine,
wherein in the switching mechanism, at least one of the high side clutch and the low side clutch is interposed on the input shaft so as to be located at a position overlapping the differential gear in a direction orthogonal to an axial direction.

6. The transaxle device according to any one of claims 2 to 5, further comprising:
a counter shaft which is disposed on the power transmission path between the output shaft and an input shaft coaxially connected to a rotating shaft of the engine; and
a casing which includes a cylindrical portion protruding from an attachment surface of the first rotating electric machine and the second rotating electric machine outward in an axial direction around the counter shaft so as not to interfere with the first rotating electric machine and the second rotating electric machine,
wherein in the switching mechanism, at least one of the high side clutch and the low side clutch is disposed inside the cylindrical portion.

7. The transaxle device according to any one of claims 1 to 6, further comprising:
an input shaft which is coaxially connected to a rotating shaft of the engine; and
a second rotating electric machine shaft which is coaxially connected to a rotating shaft of the second rotating electric machine,
wherein the switching mechanism includes a component which rotates together with the input shaft, and
wherein a gear which normally engages with a fixed gear fixed to the second rotating electric machine shaft is fixed to the component.
